# EUROPEAN PATENT SPECIFICATION

(11) **EP 3 079 991 B1**
(45) Date of publication and mention of the grant of the patent: **04.04.2018**
(21) Application number: 14809884.1
(22) Date of filing: 11.12.2014
(51) Int. Cl.: B65B 51/10, B65B 61/00, B65B 31/02, B65B 43/50, B65B 59/00, B65B 59/02, B65B 7/16, B65B 59/04

(54) **PACKAGING DEVICE**
VERPACKUNGSVORRICHTUNG
DISPOSITIF D'EMBALLAGE

(30) Priority: 13.12.2013 IT MI20132079
(43) Date of publication of application: 19.10.2016
(73) Proprietor: Scolaro, Mauro, 20063 Cernusco Sul Naviglio (IT)
(72) Inventor: ROSSINI, Antonio, I-20040 Cambiago (IT)
(74) Representative: Modiano, Micaela Nadia
(86) International application number: PCT/EP2014/077426
(87) International publication number: WO 2015/086764

(56) References cited:
- EP-A1- 2 383 091
- WO-A1-2012/080932
- WO-A2-97/24262
- DE-A1- 4 425 728
- DE-A1- 10 031 356
- US-A1- 2012 159 898

## Description

The present invention relates to a packaging device, particularly for vacuum packaging, and particularly for packaging trays containing food products or the like.

Currently in the sector of packaging food trays, heat-sealing machines are known which perform, generally in vacuum bells or in a controlled atmosphere, the heat-sealing of a film on the edge of a tray containing the food product and then trim the film that has been heat-sealed on the edge of the tray, by way of a die punch or other cutting means. In the above heat-sealing operation, the tray is usually accommodated in a lower die, and an upper heat-sealing plate, with substantially identical shape and dimensions to those of the tray to be heat-sealed, is brought proximate to and pressed against the edges of the tray, so that the film interposed between the tray and the upper plate is heat-sealed at the edges of the tray.

Such conventional machines are not devoid of drawbacks, including first of all the fact that they are dedicated machines for a specific type of tray, in terms of dimensions and/or format, and therefore are difficult to modify. In particular, in order to be able to work on trays of different dimensions and/or formats it is necessary for an operator to intervene and substitute at least the lower die, and usually the heat-sealing plate as well, in order to be able to adapt it to the specific tray being processed.

Such conventional machines are therefore rather inflexible in use. Furthermore, the complex substitution, performed by hand, of the die and of the heat-sealing plate requires an extended machine shutdown, which entails unwanted increases in cost.

EP 2 383 091 A1 discloses a tool change system for a packaging machine, comprising transfer means adapted to transfer a tool to or from the packaging machine. The transfer means are adapted to rotatably transfer the tool to or from the machine. The tool comprises at least one cavity where a unit adapted to packages of a predetermined shape is disposed. WO 2012/080932 discloses a packaging device for packaging trays in a controlled atmosphere and by means of a film of plastic material. The device comprises an upper chamber and a lower chamber, which can be fastened by mutually superimposing them and are each provided internally with a plurality of heat-sealing and/or cutting and/or die-cutting means arranged concentrically. The lower chamber is provided centrally with a plurality of supporting means for a tray.

The aim of the present invention consists in providing a packaging device that overcomes the limitations of the known art, by making it possible to process food trays of various different formats and/or dimensions.

Within this aim, an object of the present invention is to provide a packaging device that is particularly simple in operation, and which can be used by an operator with no special training.

Another object of the invention consists in providing a packaging device that makes it possible to avoid unwanted machine shutdowns and "dead" times for the substitution of the die and of the heat-sealing plate.

Another object of the invention consists in providing a packaging device that is capable of offering the widest guarantees of reliability and safety in use.

In accordance with the invention, there is provided a packaging device as defined in the appended claims.

Further characteristics and advantages of the invention will become better apparent from the detailed description of a preferred, but not exclusive, embodiment of a packaging device, which is illustrated by way of non-limiting example with the aid of the accompanying drawings wherein:

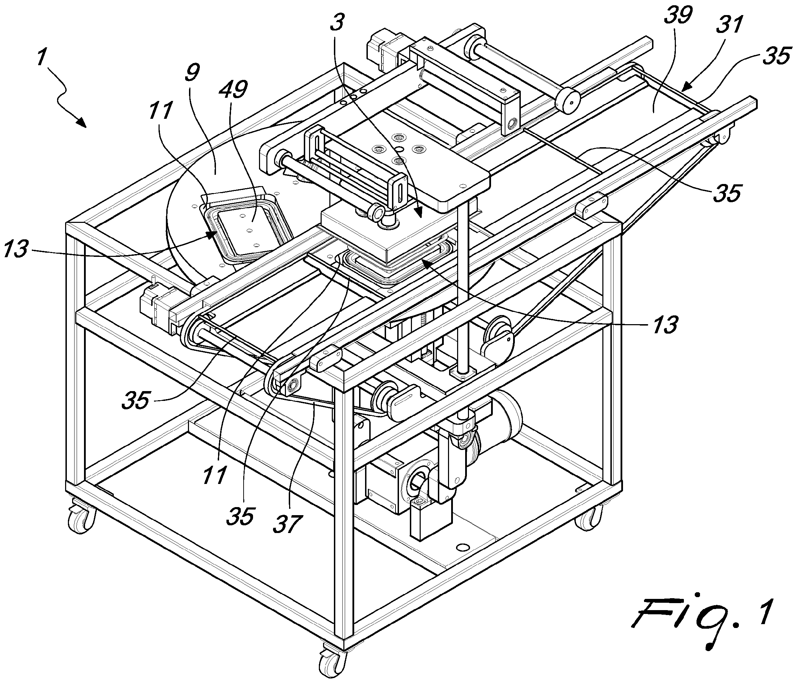

Figure 1 is a perspective view of an embodiment of a packaging device, according to the invention;

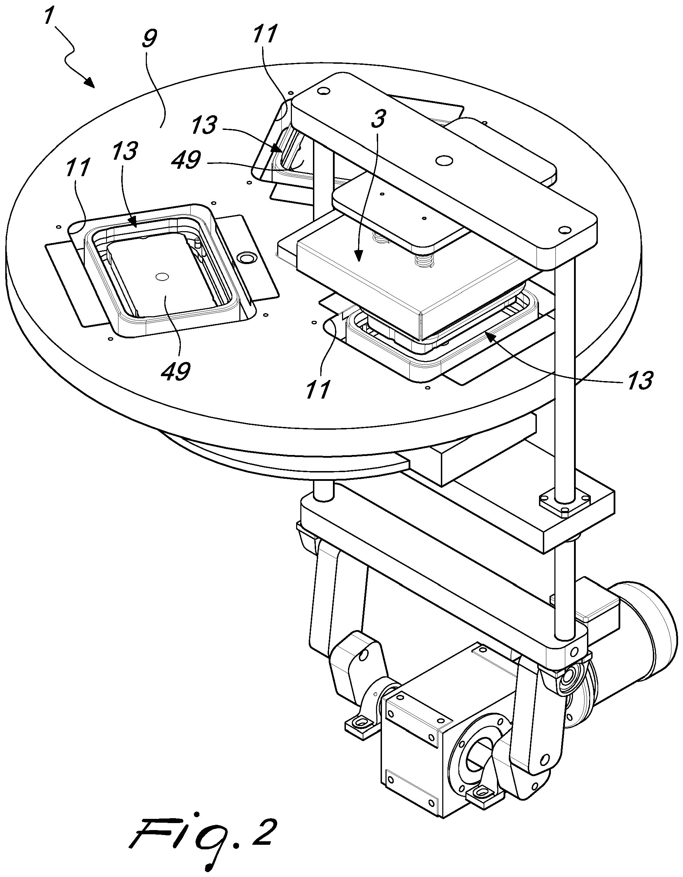

Figure 2 is a perspective view of some components only of the packaging device shown in Figure 1;

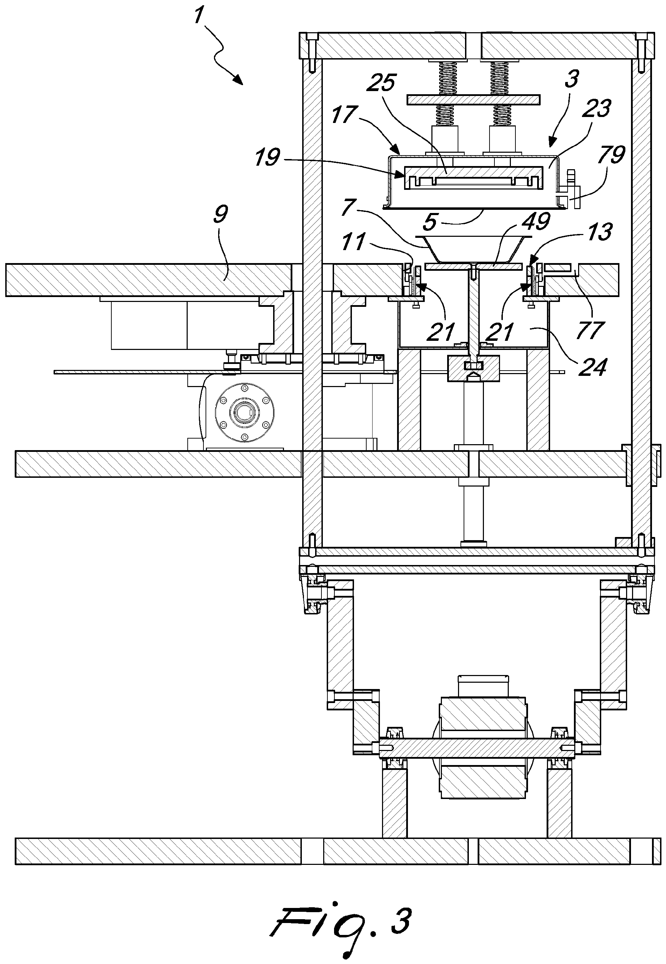

Figure 3 is a sectional side view of the packaging device shown in Figure 1, in a configuration for beginning work;
Figure 4 is an enlarged detail of part of Figure 3;
Figure 5 is a sectional side view of the packaging device shown in Figure 1, in a configuration for generating the vacuum;

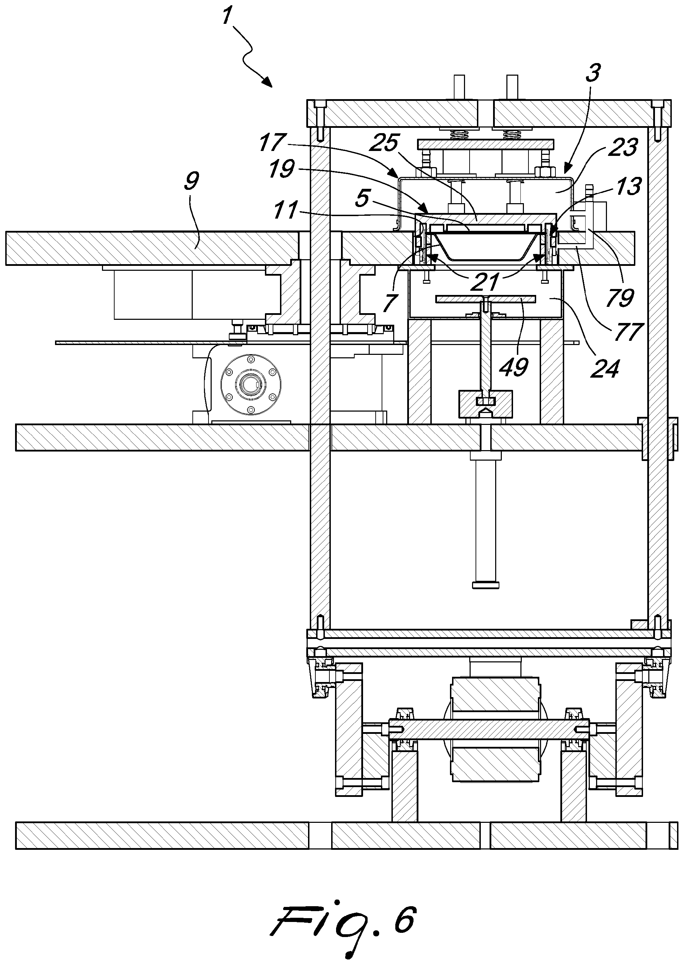

Figure 6 is a sectional side view of the packaging device shown in Figure 1, in a configuration for heat-sealing and cutting;
Figure 7 is an enlarged detail of part of Figure 6;
Figure 8 is a sectional side view of the packaging device shown in Figure 1, provided with a measurement station;
Figure 9 is a view from above of the measurement station shown in Figure 8;
Figure 10 is a front elevation view of the measurement station shown in Figure 8;
Figure 11 shows a die belonging to the heat-sealing and cutting station of the packaging device, according to the invention;
Figures 12 and 13 show the die in Figure 11, in a side elevation view, in two different working positions.

With reference to the figures, the packaging device, generally designated by the reference numeral 1, comprises a heat-sealing and cutting station 3 for heat-sealing a film 5 on the edge of a tray 7, and for cutting the film 5, once heat-sealed to the edge of the tray 7.

According to the invention, the packaging device 1 comprises a supporting surface 9 that comprises a plurality of receptacles 11 that accommodate a plurality of dies 13. The dies 13 can have different dimensions and/or formats in order to accommodate trays 7 of different dimensions and/or formats. The supporting surface 9 is actuatable in order to move one of the dies 13 at the heat-sealing and cutting station 3. In this manner, at the heat-sealing and cutting station 3, the tray 7 is accommodated in the corresponding die 13 for the execution of the operations of heat-sealing and cutting the film 5.

Advantageously, the supporting surface 9 can be a rotating table, the rotation of which is such as to place one of the dies 13 at the heat-sealing and cutting station 3. In particular, as illustrated in the accompanying figures, the rotatable supporting surface 9 comprises three receptacles 11, one for each die 13. The rotation of the supporting surface 9 therefore makes it possible to place a designated die 13 at the heat-sealing and cutting station 3.

The packaging device 1 can comprise means 31 for conveying the trays 7 from a station for feeding the trays 7 to the die 13 that is accommodated in the supporting surface 9 that is arranged at the heat-sealing and cutting station 3.

The conveyor means 31 comprise rods 35, which are advantageously actuated by a motorized chain 37 and are adapted to slide over a sheet metal surface 39. The trays 7 are pushed by the rods 35 along the sheet metal surface 39 to the heat-sealing and cutting station 3 where the correct die 13 is already arranged. In particular, the sheet metal surface 39, which is arranged at a height that is greater than that at which the die 13 is arranged at the heat-sealing and cutting station 3, comprises a hole that faces the die 13. In this manner, the tray 7 is pushed by the rods 35 into the hole and falls into the die 13.

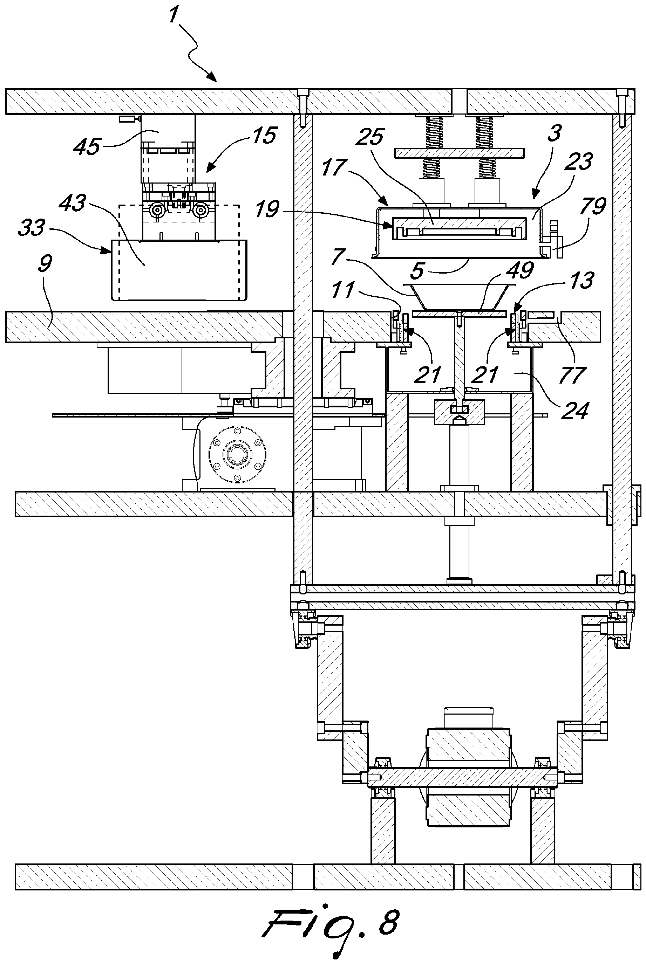

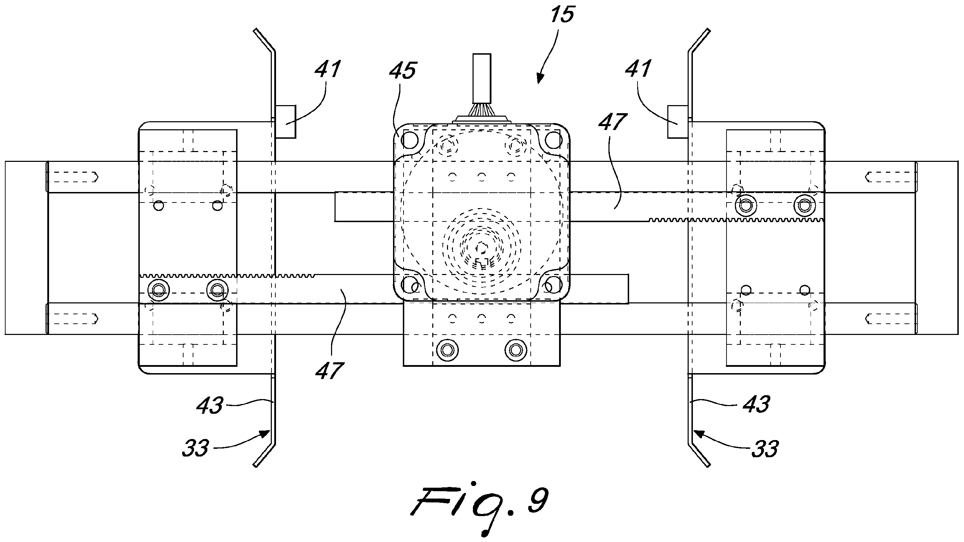

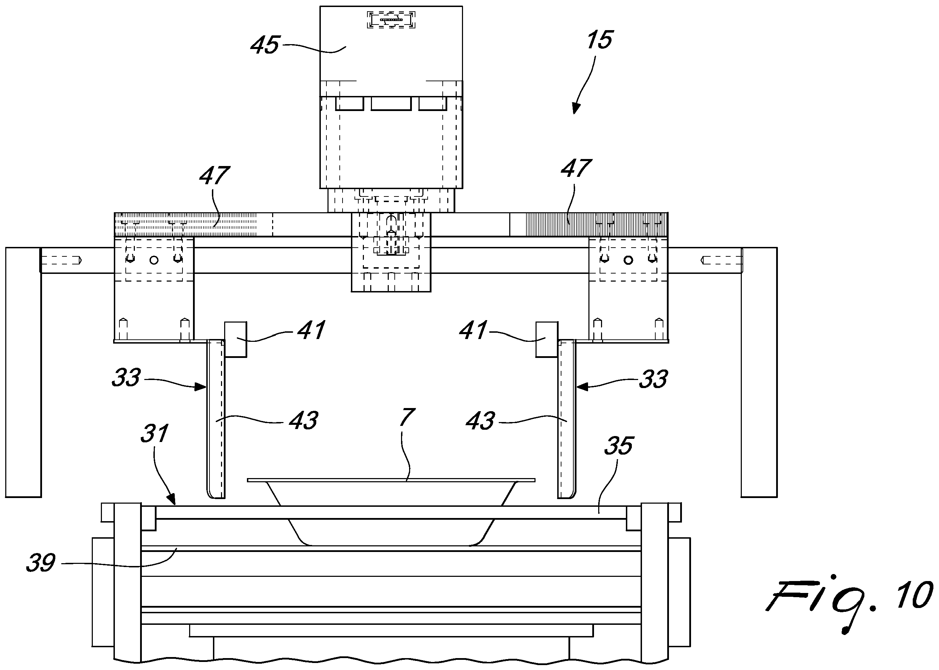

Furthermore the packaging device 1 can comprise a station 15 for measuring the dimensions and/or format of the tray 7, arranged upstream of the heat-sealing and cutting station 3, as shown in Figures 8, 9 and 10.

The detection of the extent of the dimensions and/or format of the tray 7 determines the selection of one of the dies 13, so that the preselected die 13 is placed at the heat-sealing and cutting station 3. The preselected die 13, once at the heat-sealing and cutting station 3, will receive the corresponding tray 7 for the execution of the operations of heat-sealing and cutting of the film 5, as explained hereinafter. In the measurement station 15 there are advantageously sensor means 41 that are adapted to measure the dimensions of the tray 7.

The measurement station 15 advantageously comprises centering means 33 for centering the tray 7 with respect to the corresponding die 13. The centering means 33 can comprise a pair of centering elements 43, which are arranged at the sides of the tray 7. The centering elements 43 are moved by a motor 45 that actuates a toothed wheel, which moves a pair of toothed racks 47 with which the centering elements 43 are connected.

The sensor means 42 advantageously comprise a laser/photocell pairing and can be advantageously connected to the centering elements 43, so that the operations of centering and measuring the tray 7 are performed substantially simultaneously. The measurement of the tray 7, in terms both of width and of length, makes it possible to select the correct die 13, to determine the length of the advancement of the rods 35 in order to ensure that the tray 7 falls correctly into the hole present in the sheet metal surface 39, thus taking up position correctly in the die 13, and to determine the length of the advancement of the film 5 to be unwound in order to completely cover the tray 7, while limiting needless waste of the film 5.

The heat-sealing and cutting station 3 advantageously comprises a vacuum bell 17 that comprises, internally, heat-sealing means 19 and cutting means 21 of the film 5. Furthermore, the vacuum bell 17 is adapted to contain one of the dies 13, and in particular the die 13 that is in each instance arranged in the heat-sealing and cutting station 3.

In particular, the vacuum bell 17 is defined by an upper chamber 23 and by a lower chamber 24, which can be locked by mutual superimposition. The lower chamber 24 is at least partially defined in the supporting surface 9. In particular, there is a lower chamber 24 for each die 13, while there is one single upper chamber 23 at the heat-sealing and cutting station 3. The rotation of the supporting surface 9 is in fact adapted to place not just the die 13, but also the corresponding lower chamber 24, at the heat-sealing and cutting station 3.

Advantageously the heat-sealing means 19 are connected kinematically to cutting means 21 for cutting the film 5, so that the movement of the heat-sealing means 19 determines the actuation of the cutting means 21. Preferably the heat-sealing means 19 comprise a heat-sealing plate 25 that is adapted to come into abutment against the film 5 in order to heat-seal it on the edges of the tray 7.

Each die 13 further comprises a surface 49 that can move vertically and is adapted to support the tray 7, and to move the tray 7 vertically, as described hereinafter.

The packaging device 1 advantageously comprises lever means 27 adapted to connect kinematically the movement of the above mentioned heat-sealing means 19, and specifically of the heat-sealing plate 25, to the actuation of the cutting means 21, so that the descent of the heat-sealing plate 25 determines the rise of the cutting means 21 beyond the heat-sealing surface 29 and the consequent cutting of the film 5.

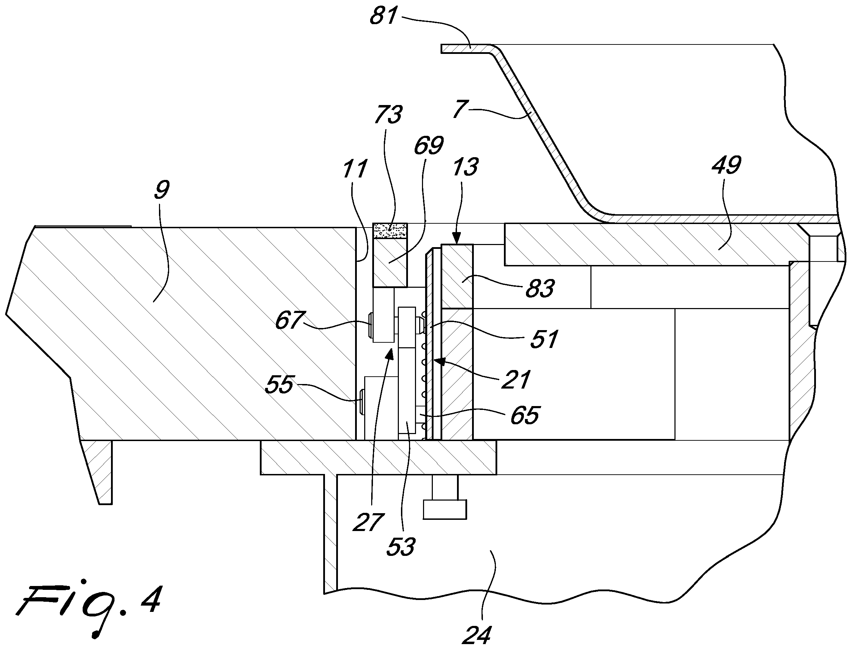

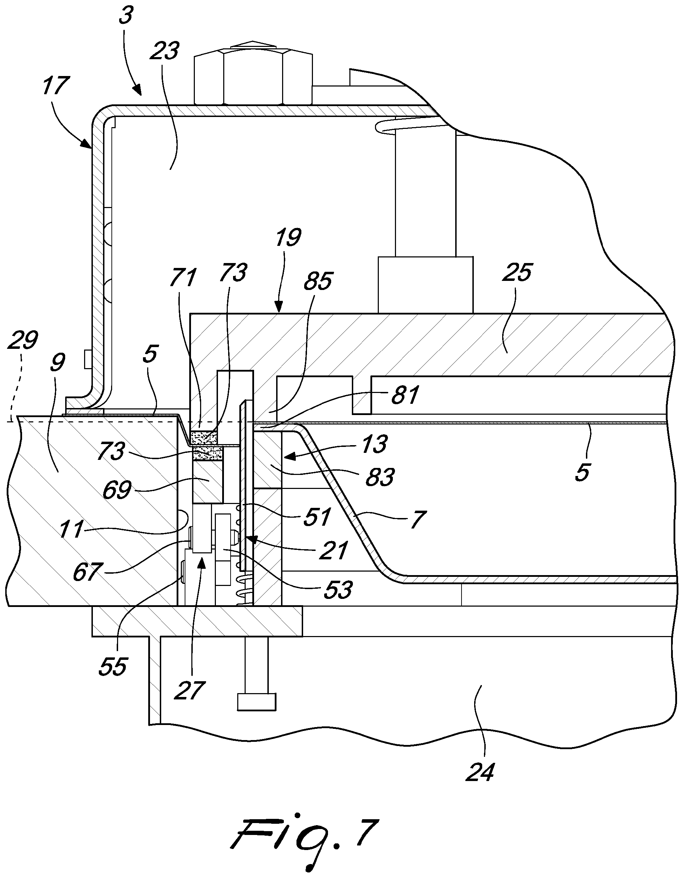

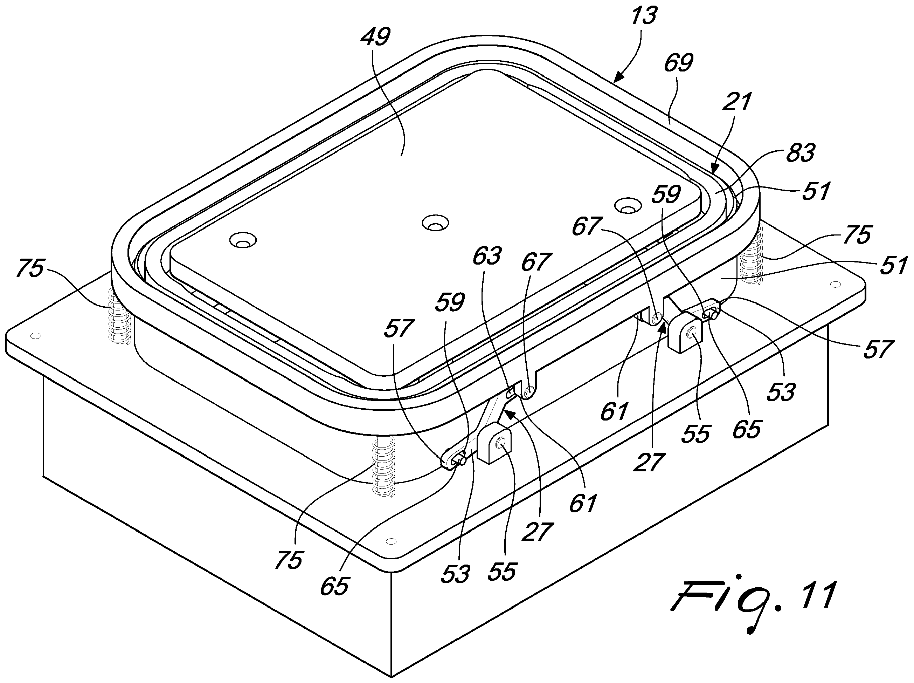

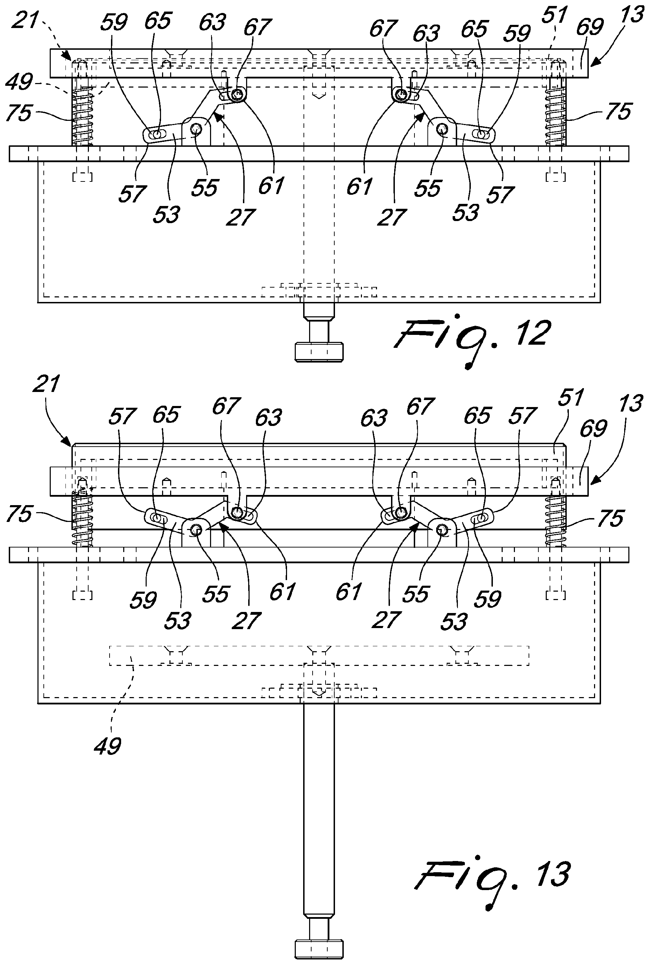

As shown in Figures 4, 7, 11, 12 and 13, the cutting means 21 comprise at least one blade 51, which runs around the entire perimeter of the die 13. The lever means 27 comprise a lever 53 pivoted with respect to a fulcrum 55 which is integral with the supporting surface 9. The lever 53 comprises, at a first end 57, a first slot 59, and, at a second end 61, a second slot 63. The first slot 59 engages with a first pivot 65, which is integral with the blade 51, while the second slot 63 engages with a second pivot 67, which is integral with a perimetric frame 69 which is external to the die 13. Lowering the perimetric frame 69 entails, by way of the above mentioned lever means 27, raising the blade 51. As is clear from Figure 7, lowering the perimetric frame 69 is done by way of the pressure that the heat-sealing plate 25 exerts, by way of its outer rim 71, on the perimetric frame 69 proper. Furthermore, the perimetric frame 69, or the outer rim 71 of the heat-sealing plate 25, or both, can comprise a rubber element 73, which helps to lock the film 5 in place during the raising of the blade 51 and the consequent cutting of the film 5. When the heat-sealing plate 25 stops exerting the pressing action on the perimetric frame 69, by way of the springs 75 it tends to return to its inactive, raised position, and consequently the blade 51 descends below the heat-sealing surface 29.

The dies 13 are advantageously replaceable if necessary. In fact each receptacle 11 defined in the supporting surface 9 can accommodate dies 13 of different dimensions and/or formats.

Operation of the packaging device 1 is as follows.

The trays 7 are fed, by a feeding station, not shown, to the sheet metal surface 39 and are pushed by the rods 35 toward the measurement and centering station 15, where the measurements of the tray 7 are taken, so as to select, from among the dies 13 present in the supporting surface 9, the correct one for the specific tray 7, and thus place it at the heat-sealing and cutting station 3, by way of the rotation of the supporting surface 9. At the same time, on the basis of the measurement of the tray 7, the rods 35 are made to advance so as to push the tray 7 to the center of the preselected die 13 and the necessary length of film 5 is unwound to cover the upper opening of the tray 7.

Once the selected die 13, with the corresponding lower vacuum chamber 24, is arranged in the heat-sealing and cutting station 3, the tray 7 is made to advance so as to be arranged on the movable surface 49.

The film 5 is conveniently made to slide under the upper vacuum chamber 23.

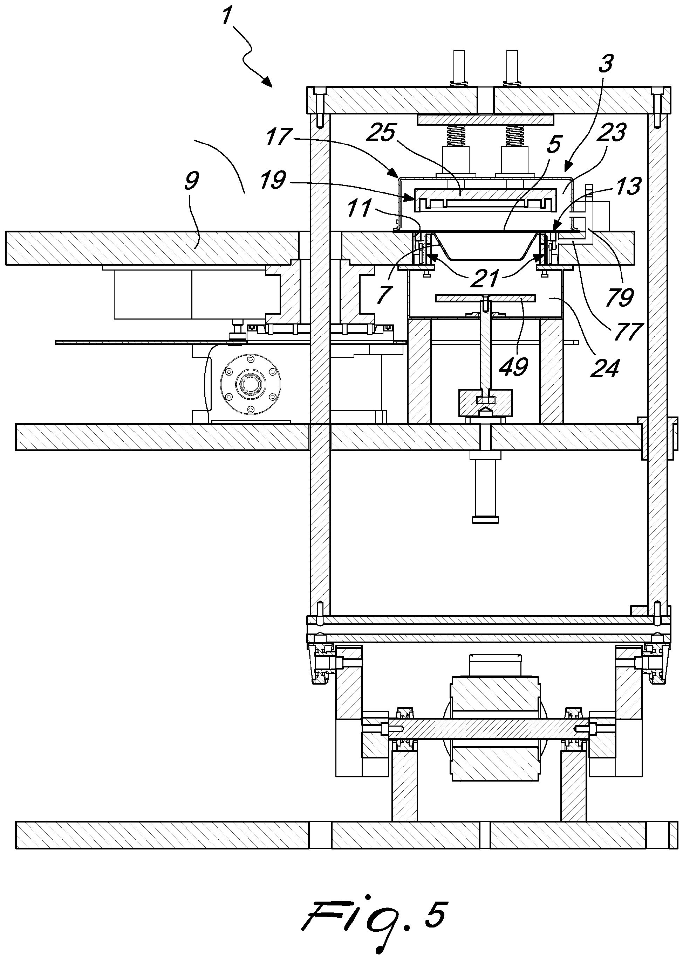

At this point, the upper vacuum chamber 23 is lowered, closing onto the lower chamber 24, and, in its lowering, also moving the film 5, which comes up against the opening of the tray 7 to be covered. By way of the vacuum ducts 77 and 79 the vacuum bell 17, defined by the two chambers 23 and 24 which are now hermetically tight, is placed under a vacuum, as illustrated in Figure 5. Through the vacuum ducts 77 and 79 it is also possible to send adapted gases that are adapted to maintain the content, generally food, of the trays 7. The upper chamber 23, the lower chamber 24, and the internal volume of the tray 7 are all affected by the vacuum or gases.

The movable surface 49 is lowered vertically, leaving the tray 7 resting, by way of its lateral edges 81, on a supporting frame 83 of the tray 7 which is defined in the die 13.

Once the conditions of vacuum have been created, the heat-sealing plate 25 descends toward the film 5, so that the innermost portion 85 of the heat-sealing plate 25 comes into abutment against the edge 81 of the tray 7, supported by the supporting frame 83, with the film 5 interposed, so that the film 5 is heat-sealed to the edges of the tray 7.

At the same time, the heat-sealing plate 25 impacts on the rubber element 73 of the perimetric frame 69, defeating the elastic force exerted by the springs 75, and actuating the lever means 27 so that the further descent of the perimetric frame 69 causes the rising of the blade 51 and thus the cutting of the film 5, which in the meantime is kept in place by the rubber elements 73.

Once the heat-sealing and the cutting of the film 5 are complete, the upper chamber 23 ascends upwardly, taking the heat-sealing plate 25 with it. The movable surface 49 rises vertically, and lifts the tray 7, which has just been sealed, so as to detach it from the supporting frame 83 and bring it to a position that enables it to be pushed out from the heat-sealing and cutting station 3 by way of the thrust impressed by the rods 35.

In practice it has been found that the packaging device, according to the present invention, achieves the intended aim and objects in that it makes it possible to process food trays of various different formats and/or dimensions.

Another advantage of the packaging device, according to the invention, consists in that it is capable of automatically recognizing the dimensions and/or the format of the trays, in order to select the correct die.

Another advantage of the device, according to the invention, consists in that it requires a vacuum bell of limited size.

Another advantage of the device, according to the invention, consists in that it makes it possible to easily change the dies, so as to render the machine flexible for use with various types of trays.

Another advantage of the device, according to the invention, consists in that it reduces the waste of film, in that it has a measurement station that is capable of establishing the exact length of film to be unwound, on the basis of the dimensions and/or the format of the tray.

Another advantage of the device, according to the invention, consists in that it is substantially mechanical, and is therefore more reliable.

The packaging device, thus conceived, is susceptible of numerous modifications and variations, all of which are within the scope of the appended claims.

Thus, for example, it is possible that the dies be moved in a rectilinear direction instead of being moved along a circular path. In this case the supporting surface would be a linear element instead of a rotating table.

Moreover, all the details may be substituted by other, technically equivalent elements.

In practice the materials employed, provided they are compatible with the specific use, and the contingent dimensions and shapes, may be any according to requirements.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A packaging device (1), comprising a heat-sealing and cutting station (3) for heat-sealing a film (5) on the edge of a tray (7) and for cutting said film (5), further comprising a supporting surface (9) that comprises a plurality of receptacles (11) simultaneously on said supporting surface (9) that accommodate a plurality of dies (13), **characterized in that** said dies (13) have different dimensions and/or formats in order to accommodate trays (7) having different dimensions and/or formats, said supporting surface (9) being actuatable in order to move one of said dies (13) at said heat-sealing and cutting station (3).

2. The packaging device (1) according to claim 1, **characterized in that** said supporting surface (9) is a rotating table, the rotation of said rotating table placing one of said dies (13) at said heat-sealing and cutting station (3).

3. The packaging device (1) according to claim 1 or 2, **characterized in that** it comprises a station (15) for measuring the dimensions and/or format of said tray (7), arranged upstream of said heat-sealing and cutting station (3), the detection of the measurement of the dimensions and/or of the format of said tray (7) causing the selection of one of said dies (13).

4. The packaging device (1), according to one or more of the preceding claims, **characterized in that** said heat-sealing and cutting station (3) comprises a vacuum bell (17), which comprises heat-sealing means (19) and means (21) for cutting said film (5), said vacuum bell (17) being adapted to contain one of said dies (13).

5. The packaging device (1) according to claim 4, **characterized in that** said vacuum bell (17) is defined by an upper chamber (23) and a lower chamber (24), which can be locked by mutual superimposition, said lower chamber (24) being at least partially defined in said supporting surface (9).

6. The packaging device (1) according to one or more of the preceding claims, **characterized in that** it comprises heat-sealing means (19) adapted to abut against said film (5) in order to heat-seal it on the edges of said tray (7), said heat-sealing means (19) being connected kinematically to cutting means (21) for cutting said film (5), so that the movement of said heat-sealing means (19) causes the actuation of said cutting means (21).

7. The packaging device (1) according to claim 6, **characterized in that** it comprises lever means (27) adapted to connect kinematically said heat-sealing means (19) to said cutting means (21), so that the descent of said heat-sealing means (19) causes the rise of said cutting means (21) beyond the heat-sealing surface (29) and the cutting of said film (5).

8. The packaging device (1) according to one or more of the preceding claims, **characterized in that** it comprises means (31) for conveying said trays (7) from a station for feeding said trays (7) to said die (13) accommodated in said supporting surface (9) located at said heat-sealing and cutting station (3).

9. The packaging device (1) according to one or more of the preceding claims, **characterized in that** said measurement station (15) comprises centering means (33) for centering said tray (7) with respect to the corresponding die (13).

10. The packaging device (1) according to one or more of the preceding claims, **characterized in that** said dies (13) are replaceable if necessary.

## Patentansprüche

1. Eine Verpackungsvorrichtung (1), die eine Heißverschweißung- und Schneidestation (3) zur Heißverschweißung eines Films (5) an dem Rand einer Schale (7) und zum Schneiden des Films (5) umfasst und die weiter eine tragende Oberfläche (9) umfasst, welche eine Vielzahl von Aufnahmevorrichtungen (11) gleichzeitig auf der tragenden Oberfläche (9) umfasst, die eine Vielzahl von Stempeln (13) aufnehmen, **dadurch gekennzeichnet, dass** die Stempel (13) verschiedene Maße und/oder Formate haben, um Schalen (7) mit verschiedenen Maßen und/oder Formaten aufzunehmen, wobei die tragende Oberfläche (9) angetrieben werden kann, um einen der Stempel (13) an der Heißverschweißung- und Schneidestation (3) zu bewegen.

2. Die Verpackungsvorrichtung (1) gemäß Anspruch 1, **dadurch gekennzeichnet, dass** die tragende Oberfläche (9) ein Drehtisch ist, wobei die Drehung des Drehtischs einen der Stempel (13) an der Heißverschweißung- und Schneidestation (3) platziert.

3. Die Verpackungsvorrichtung (1) gemäß Anspruch 1 oder 2, **dadurch gekennzeichnet, dass** sie eine Station (15) zum Messen der Maße und/oder des Formats der Schale (7) umfasst, die stromaufwärts von der Heißverschweißung- und Schneidestation (3) angeordnet ist, wobei die Erfassung der Messung der Maße und/oder des Formats der Schale (7) die Auswahl eines der Stempel (13) bewirkt.

4. Die Verpackungsvorrichtung (1) gemäß einem oder mehreren der obigen Ansprüche, **dadurch gekennzeichnet, dass** die Heißverschweißung- und Schneidestation (3) eine Vakuumglocke (17) umfasst, die Heißverschweißungsmittel (19) und Mittel (21) zum Schneiden des Films (5) umfasst, wobei die Vakuumglocke (17) ausgebildet ist, um einen der Stempel (13) aufzunehmen.

5. Die Verpackungsvorrichtung (1) gemäß Anspruch 4, **dadurch gekennzeichnet, dass** die Vakuumglocke (17) durch eine obere Kammer (23) und eine untere Kammer (24) bestimmt ist, die durch gegenseitige Überlagerung verriegelt werden können, wobei die untere Kammer (24) zumindest teilweise in der tragenden Oberfläche (9) bestimmt ist.

6. Die Verpackungsvorrichtung (1) gemäß einem oder mehreren der obigen Anspruche, **dadurch gekennzeichnet, dass** sie Heißverschweißungsmittel (19) umfasst, die ausgebildet sind, um an den Film (5) abzustoßen, um ihn an den Rändern der Schale (7) heiß zu verschweißen, wobei die Heißverschweißungsmittel (19) kinematisch mit Schneidemitteln (21) zum Schneiden des Films (5) verbunden sind, so dass die Bewegung der Heißverschweißungsmittel (19) den Antrieb der Schneidemittel (21) bewirkt.

7. Die Verpackungsvorrichtung (1) gemäß Anspruch 6, **dadurch gekennzeichnet, dass** sie Hebelmittel (27) umfasst, die ausgebindet sind, um die Heißverschweißungsmittel (19) kinematisch mit den Schneidemitteln (21) zu verbinden, so dass das Absenken der Heißverschweißungsmittel (19) den Anstieg der Schneidemittel (21) über die Heißverschweißungsfläche (29) hinaus sowie das Schneiden des Films (5) verursacht.

8. Die Verpackungsvorrichtung (1) gemäß einem oder mehreren der obigen Ansprüche, **dadurch gekennzeichnet, dass** sie Mittel (31) zum Befördern der Schalen (7) von einer Station zum Zuführen der Schalen (7) zu dem Stempel (13) umfasst, der in der tragenden Oberfläche (9) untergebracht ist, die an der Heißverschweißung- und Schneidestation (3) angeordnet ist.

9. Die Verpackungsvorrichtung (1) gemäß einem oder mehreren der obigen Ansprüche, **dadurch gekennzeichnet, dass** die Mess-Station (15) Zentriermittel (33) zum Zentrieren der Schale (7) mit Bezug auf den entsprechenden Stempel (13) umfasst.

10. Die Verpackungsvorrichtung (1) gemäß einem oder mehreren der obigen Ansprüche, **dadurch gekennzeichnet, dass** die Stempel (13) bei Bedarf austauschbar sind.

## Revendications

1. Dispositif de conditionnement (1), comprenant un poste de thermo-soudage et de coupe (3), destiné à thermo-souder un film (5) sur le bord d'un plateau (7) et à couper ledit film (5), comprenant en outre une surface support (9), qui comprend une pluralité de logements (11) simultanément sur ladite surface support (9) qui loge une pluralité de filières (13),
**caractérisé en ce que**
lesdites filières (13) ont différent(e)s dimensions et / ou formats afin de loger les plateaux (7), ayant différent(e)s dimensions et / ou formats, ladite surface support (9) pouvant être actionnée afin de déplacer l'une desdites filières (13) sur ledit poste de thermo-soudage et de coupe (3).

2. Dispositif de conditionnement (1) selon la revendication 1,
**caractérisé en ce que**
ladite surface support (9) est une table rotative, la rotation de ladite table rotative plaçant l'une desdites filières (13) sur ledit poste de thermo-soudage et de coupe (3).

3. Dispositif de conditionnement (1) selon la revendication 1 ou 2,
**caractérisé en ce**
**qu'**il comprend un poste (15), destiné à mesurer les dimensions et / ou le format dudit plateau (7), agencé en amont dudit poste de thermo-soudage et de coupe (3), la détection du mesurage des dimensions et / ou du format dudit plateau (7) provoquant la sélection de l'une desdites filières (13).

4. Dispositif de conditionnement (1) selon une ou plus des revendications précédentes,
**caractérisé en ce que**
ledit poste de thermo-soudage et de coupe (3) comprend une cloche à vide (17), qui comprend un moyen de thermo-soudage (19) et un moyen (21), destiné à couper ledit film (5), ladite cloche à vide (17) étant adaptée pour contenir l'une desdites filières (13).

5. Dispositif de conditionnement (1) selon la revendication 4,
**caractérisé en ce que**
ladite cloche à vide (17) est définie par une chambre supérieure (23) et une chambre inférieure (24), qui peuvent être verrouillées par superposition mutuelle, ladite chambre inférieure (24) étant au moins partiellement définie dans ladite surface support (9).

6. Dispositif de conditionnement (1) selon une ou plus des revendications précédentes,
**caractérisé en ce**
**qu'**il comprend un moyen de thermo-soudage (19), adapté pour s'appuyer contre ledit film (5), afin de le thermo-souder sur les bords dudit plateau (7), ledit moyen de thermo-soudage (19) étant relié cinématiquement au moyen de coupe (21), destiné à couper ledit film (5), de sorte que le mouvement dudit moyen de thermo-soudage (19) provoque l'actionnement dudit moyen de coupe (21).

7. Dispositif de conditionnement (1) selon la revendication 6,
**caractérisé en ce**
**qu'**il comprend un moyen formant levier (27), adapté pour relier cinématiquement ledit moyen de thermo-soudage (19) audit moyen de coupe (21), de sorte que la descente dudit moyen de thermo-soudage (19) provoque la montée dudit moyen de coupe (21) au-delà de la surface de thermo-soudage (29) et la coupe dudit film (5).

8. Dispositif de conditionnement (1) selon une ou plus des revendications précédentes,
**caractérisé en ce**
**qu'**il comprend un moyen (31), destiné à convoyer lesdits plateaux (7) d'un poste, destiné à amener lesdits plateaux (7) à ladite filière (13), logé dans ladite surface support (9), située sur ledit poste de thermo-soudage et de coupe (3).

9. Dispositif de conditionnement (1) selon une ou plus des revendications précédentes,
**caractérisé en ce que**
ledit poste de mesurage (15) comprend un moyen de centrage (33), destiné à centrer ledit plateau (7) par rapport à la filière (13) correspondante.

10. Dispositif de conditionnement (1) selon une ou plus des revendications précédentes,
**caractérisé en ce que**
lesdites filières (13) peuvent être remplacées si nécessaire,
